# EUROPÄISCHE PATENTSCHRIFT

(11) **EP 2 069 739 B1**
(45) Veröffentlichungstag und Bekanntmachung des Hinweises auf die Patenterteilung: **13.06.2012**
(21) Anmeldenummer: 07802712.5
(22) Anmeldetag: 20.08.2007
(51) Int. Cl.: G01L 19/14, G01L 19/00, G01D 11/24, G01K 1/14, G01D 21/02

(54) **STECKFÜHLER ZUR KOMBINIERTEN DRUCK- UND TEMPERATURMESSUNG**
SENSOR PLUG FOR COMBINED PRESSURE- AND TEMPERATURE MEASUREMENT
CAPTEUR ENFICHABLE AVEC MESURE COMBINÉE DE PRESSION ET DE TEMPÉRATURE

(30) Priorität: 15.09.2006 DE 102006043324
(43) Veröffentlichungstag der Anmeldung: 17.06.2009
(73) Patentinhaber: Robert Bosch GmbH, 70442 Stuttgart (DE)
(72) Erfinder: ENGELHARDT, Joerg, 71254 Ditzingen (DE); STOLL, Oliver, 72762 Reutlingen (DE); ROESSER, Christian, 71723 Grossbottwar (DE)
(86) Internationale Anmeldenummer: PCT/EP2007/058613
(87) Internationale Veröffentlichungsnummer: WO 2008/031691

(56) Entgegenhaltungen:
- EP-A- 0 893 676
- WO-A-2007/078817
- DE-A1- 10 157 068
- DE-A1- 19 745 244
- DE-A1-102005 013 818
- FR-A- 2 691 802

## Beschreibung

### Stand der Technik

In verschiedenen Bereichen der Technik müssen gleichzeitig verschiedene Parameter fluider Medien, also von Gasen und/oder Flüssigkeiten, gemessen werden. Insbesondere ist für viele Anforderungen eine gleichzeitige Messung von Druck und Temperatur erforderlich. Zu diesem Zweck sind kombinierte Druck- und Temperaturfühler entwickelt worden, welche je nach relevantem Anwendungsbereich optimiert sind.

Ein wichtiges Anwendungsbeispiel hierbei sind kombinierte Druck- und Temperatursensoren für Klimaanlagen. In Klimaanlagen wird üblicherweise die Verdampfungswärme eines Kühlmittels zum Abkühlen von Luft (oder eines anderen zu kühlenden Mediums) genutzt. Anschließend wird in einem Kompressor das Kühlmittel wieder verdichtet und damit verflüssigt. Beim Verdichten tritt eine Erwärmung des Kühlmittels auf. Diese aufgenommene Wärme wird, üblicherweise an einem Gaskühler, wieder an die Umgebung abgegeben. Der Verdichtungsvorgang mittels des Kompressors muss dabei üblicherweise derart gesteuert werden, dass der Betriebsdruck einen vorgegebenen Maximaldruck und die Betriebstemperatur eine vorgegebene Maximaltemperatur nicht übersteigen. Druck und Temperatur müssen zu diesem Zweck erfasst werden.

Die Verwendung von zwei separaten Sensoren zur Erfassung von Druck und Temperatur stellt jedoch einen erheblichen Aufwand dar, da zumindest zwei Stecker und mehrere Kabelstränge vorgehalten werden müssen. Weiterhin ergeben sich durch Verwendung mehrerer einzelner Sensoren mehrere Dichtstellen an den Schnitt- und Verbindungsstellen der einzelnen Komponenten zueinander. Daher wird angestrebt, sowohl das Druck- als auch das Temperatursignal durch einen kombinierten Druck- und Temperatursensor zu erhalten. Derartige kombinierte Druck- und Temperatursensoren sind z. B. aus EP 1 521 061 A2, DE 101 09 095 A1 sowie aus DE 197 45 244 A1 und EP 0 893 676 A2 bekannt.

Für zukünftige in Kraftfahrzeugen eingesetzte Klimaanlagen steht der Ersatz der herkömmlichen R134a-Klimaanlagen durch CO₂-Klimaanlagen zu erwarten, da gemäß der EU-Gesetzgebung das in Klimaanlagen bisher eingesetzte Kältemittel R 134a ab dem Jahre 2016 vollständig verboten werden wird. Bei derartigen CO₂-Klimaanlagen treten im Vergleich zu konventionellen Klimaanlagen erhöhte Betriebsdrucke und Temperaturbelastungen auf, welche vollkommen neue Anforderungen an Druck- und Temperaturbelastung der Bauteile und Sensoren stellen. So treten im Betrieb Drücke bis zu 140 bar und Medientemperaturen bis zu 180 °C auf. Typischerweise werden an die Dichtheit der Systeme Leckageanforderungen von weniger als 1 g pro Jahr gestellt.

Bei der in EP 0 893 676 A2 vorgeschlagenen Lösung eines kombinierten Druck- und Temperaturfühlers wird ein Kondensator mit variabler Kapazität eingesetzt, welcher eine flexible Membran zur Druckmessung umfasst. Auf die flexible Membran ist als Temperaturfühler ein Thermistor aufgesetzt. Es werden vergleichsweise aufwändige Abdichtungen der Membran mittels konventioneller O-Ringe verwendet, welche im Betrieb mit längerer Betriebszeit (insbesondere bei den angesprochenen erhöhten Temperaturbelastungen) leicht verspröden, so dass eine Druckdichtigkeit auf längere Sicht nicht gewährleistet ist. Ein weiterer Nachteil besteht in der Komplexität des Aufbaus der Dichtungen, welche mehrere Arbeitsschritte erforderlich machen und welche somit die Montagedauer und die Montagekosten stark erhöhen. Ein weiterer Nachteil der vorgeschlagenen Lösung besteht darin, dass das vorgeschlagene Messkonzept, insbesondere das Messkonzept der Temperaturmessung, vergleichsweise ungenau ist, da die Druckmessmembran mit dem aufgesetzten Thermistor relativ weit vom Messmedium entfernt angeordnet ist.

Bei der Lösung gemäß DE 101 09 095 A1 wird ein Frontmembransensor mit aufgesetztem Messfinger eingesetzt. Diese Lösung geht jedoch mit dem Nachteil einher, dass der Sensor insbesondere im Membranbereich sehr empfindlich ist, so dass in vielen Fällen ein Schutzschirm vorgebaut werden muss. Bei dieser Lösung handelt es sich um eine in Rennsportapplikationen eingesetzte Lösung, deren Standzeit vergleichsweise kurz ist. Ein weiterer Nachteil der in DE 101 09 095 A1 dargestellten Lösung besteht darin, dass die Genauigkeit der Druck- und/oder Temperaturmessungen mit der vorgeschlagenen Anordnung je nach Einbausituation des kombinierten Sensors bei ansonsten gleichen Bedingungen stark variieren kann.

Erschwert wird die beschriebene Einbauproblematik dadurch, dass in üblichen Klimaanlagen, wie sie beispielsweise im Kraftfahrzeug vorgesehen sind, lediglich sehr geringe Rohrdurchmesser der Kühlmittelrohre auftreten. Diese Rohrdurchmesser liegen üblicherweise im Bereich von ca. 8 mm. Dadurch entstehen im Bereich der Sensorbohrung, welche größer sein muss als 8 mm (üblicherweise ca. 10 mm), Gebiete mit verminderter Strömungsgeschwindigkeit, da in diesen Bereichen Rohre mit erweitertem Durchmesser eingesetzt werden müssen. In diesen Gebieten kühlt das Messmedium schneller ab, und die Temperatur weicht erheblich von der eigentlichen Medientemperatur ab. Bei einer exzentrischen Anordnung des Temperaturfühlers, wie dies beispielsweise in DE 101 09 095 A1 vorgeschlagen wird, kann es vorkommen, dass der Temperaturfühler beim Einschrauben genau in diesen Gebieten der Temperaturabweichung zu liegen kommt. Die Genauigkeit des Temperatursignals hängt somit von der zufälligen Position des Messfingers nach dem Einschrauben ab. Eine zentrische Anordnung, des Temperaturfühlers ist jedoch aufgrund der aus Bauraumgründen vorzugsweise zentralen Anordnung des Drucksensors in vielen Fällen nicht oder nur schwer möglich.

Aus der FR 2 691 802 A1 ist ein Steckühler zur Druck- und Temperaturmessung bekannt, bei dem eine zweiteilige Aufnahme vorgesehen ist. Die Aufnahme umfasst eine eine relativ zur Sensorkörperachse geneigte Bohrung, in welcher eine Anschlussleitung geführt ist, und einen parallel zur Sensorachse verlaufenden Abschnitt mit Messfinger, in dem ein Temperaturfühler aufgenommen ist.

### Offenbarung der Erfindung

Die Erfindung schlägt daher einen Steckfühler zur Druck- und Temperaturmessung eines fluiden Mediums, insbesondere für den Einsatz im Kühlmittelkreislauf einer Klimaanlage eines Kraftfahrzeuges, vor, welcher die oben beschriebenen Nachteile des Standes der Technik vermeidet und welcher hohe Robustheit und gleichzeitig eine gute Reproduzierbarkeit sowohl des Druck- als auch des Temperatursignals gewährleistet. Der Steckfühler ist insbesondere für den Einsatz in CO₂-Klimaanlagen verwendbar.

Ein Gedanke der Erfindung besteht darin, eine zentral angeordnete Temperaturmessung mit einer konventionellen Drucksensorik zu kombinieren. Dabei wird die Problematik, dass, insbesondere bei kleinen Steckfühlern, der Drucksensor aus Konsbuktionsgründen üblicherweise mittig angeordnete wird, durch eine spezielle Anordnung der verschiedenen erforderlichen Bohrungen gelöst.

Der vorgeschlagene Steckfühler weist daher einen Sensorkörper mit einer Sensorkörperachse auf, wobei es sich beispielsweise bei der Sensorkörperachse um die Symmetrieachse des Sensorkörpers handeln kann. Dies bedeutet jedoch nicht notwendigerweise, dass der Sensorkörper vollständig symmetrisch ausgestaltet sein muss. Weiterhin weist der Sensorkörper einen im Wesentlichen konzentrisch auf der Sensorkörperachse angeordneten Drucksensor auf. Beispielsweise kann es sich bei diesem Drucksensor (wobei naturgemäß auch mehrere Drucksensoren vorgesehen sein können) um einen Membran-Drucksensor handeln, beispielsweise einen Membran-Drucksensor, wie er in Robert Bosch GmbH: "Sensoren im Kraftfahrzeug", 2001, Seite 78, oder in Stefan Butzmann (Herausgeber): "Sensorik im Kraftfahrzeug", expert Verlag, 2006, Seite 77, beschriebene ist. Auch andere Arten von Drucksensoren, beispielsweise Drucksensoren, die auf anderen Messprinzipien beruhen, sind einsetzbar.

Weiterhin weist der erfindungsgemäße Steckfühler eine im Sensorkörper angeordnete Durchgangsbohrung auf, welche zur Verbindung des Drucksensors mit dem fluiden Medium dient. Weiterhin ist im Sensorkörper eine Temperaturfühlerbohrung vorgesehen, mit einem darin aufgenommenen Temperaturfühler. Um gleichzeitig eine zentrale, d. h. im Wesentlichen konzentrische Anordnung des Drucksensors auf der Sensorkörperachse und dennoch eine zentrale Temperaturmessung zu ermöglichen, ist die Temperaturfühlerbohrung mit einer Temperaturfühlerbohrungsachse ausgestattet, welche gegenüber der Sensorkörperachse derart geneigt ist, dass diese an ihrem dem fluiden Medium zugewandten Ende der Sensorkörperachse zugeneigt ist. Unter "im Wesentlichen" ist dabei zu verstehen, des auch eine leichte Abweichung der Anordnung des Drucksensors von einer konzentrischen Anordnung toleriert werden kann, wobei die Abweichung von der konzentrischen Anordnung vorzugsweise jedoch nicht mehr als 10 % des Durchmessers des Drucksensors beträgt. Der Steckfühler weist weiterhin einen aus dem Sensorkörper hervorstehenden Messfinger auf Die Temperaturfühlerbohrung ist als Sacklochbohrung ausgestaltet und ganz oder teilweise in dem Messfinger angeordnet. Das Temperatursensorelement ist ganz oder teilweise in dem Messfinger aufgenommen.

Die vorgeschlagene Anordnung, des Steckfühlers mit der geneigten Temperaturfühlerbohrungsachse ermöglicht eine erhöhte Genauigkeit der Temperaturmessung, da nunmehr, trotz zentraler Anordnung des Drucksensors, eine zentrische Temperaturmessung (beziehungsweise eine Temperaturmessung in der Nähe des Zentrums) möglich ist. Auf diese Weise kann gleichzeitig ein kleinbauender Steckfühler mit zentrischem Drucksensor realisiert werden, welcher jedoch dennoch eine hohe Genauigkeit sowohl der Druckals auch der Temperaturmessung aufweist.

Insbesondere kann der Steckfühler ein Temperatursensorelement aufweisen, vorzugsweise einen NTC-Widerstand. Dabei ist vorzugsweise die Temperaturfühlerbohrungsachse derart angeordnete dass diese die Sensorkörperachse im Bereich des Temperatursensörelements schneidet. Beispielsweise kann die Temperaturfühlerbohrung (mit entsprechenden Bohrungsschultern oder ähnlichem) derart ausgestaltet sein, dass das Temperatursensorelement entsprechend angeordnet und/oder gehaltert ist. Auf diese Weise kann eine zentrische Anordnung des Temperatursensorelements gewährleistet werden. Unter "im Bereich" sind dabei auch gewisse Toleranzen umfasst, beispielsweise eine Abweichung des Temperatursensorelements von dem Schnittpunkt zwischen Sensorkörperachse und Temperaturfühlerbohrungsachse um nicht mehr als 20 % der räumlichen Ausdehnung des Temperatursensörelements. Alternativ oder zusätzlich kann die Anordnung auch so gewählt werden, dass der Schnittpunkt zwischen Sensorkörperachse und Temperaturfühlerbohrungsachse noch im Bereich der räumlichen Ausdehnung des Temperatursensorelements liegt.

Für die oben beschriebenen Rohrdurchmesser in Klimaanlagen hat es sich insbesondere bewährt, wenn die Temperaturfühlerbohrungsachse und die Sensorkörperachse einen Winkel im Bereich zwischen 3° und 70°, vorzugsweise zwischen 5° und 20° und besonders bevorzugt bei ca. 13° einschließen. Auf diese Weise lassen sich die üblichen Sensorgeometrien besonders vorteilhaft an bestehende Systeme anpassen, wobei der tatsächlich verwendete Winkel beispielsweise an die Sensorlänge, beispielsweise eine Gewindelänge, angepasst werden kann.

Weiterhin kann auch die Durchgangsbohrung zumindest teilweise zylindrisch mit einer Durchgangsbohrungsachse ausgestaltet sein. Diese zylindrische Ausgestaltung ist fertigungstechnisch besonders günstig. Dabei ist vorzugsweise die Durchgangsbohrungsachse ebenfalls zur Sensorkörperachse geneigt, derart, dass die Durchgangsbohrungsachse an ihrem dem fluiden Medium zuweisenden Ende von der Sensorkörperachse weggeneigt ist. Auf diese Weise kann beispielsweise die Durchgangsbohrungsachse der Temperaturfühlerbohrung "ausweichen". Beispielsweise können die Durchgangsbohrungsachse und die Temperaturfühlerbohrungsachse zumindest teilweise parallel ausgestaltet sein. Insbesondere kann die Durchgangsbohrungsachse an ihrem dem fluiden Medium zuweisenden Ende von der Sensorkörperachse weggeneigt sein. Dementsprechend können die Durchgangsbohrungsachse und die Sensorkörperachse vorzugsweise einen Winkel im selben Bereich wie dem oben beschriebenen Winkelbereich einschließen. Der beschriebene Steckfühler in einer der aufgezeigten Ausführungen lässt sich durch verschiedene Weiterbildungen zusätzlich verbessern, welche sich besonders vorteilhaft in Kombination mit den beschriebenen Neigungen der Bohrungsachsen bemerkbar machen. So kann beispielsweise der Sensorkörper ein Außengewinde zum Einschrauben in eine Steckfühlerbohrung aufweisen, sowie eine an seinem dem fluiden Medium zuweisenden Ende angeordnete Kegeldichtung. Im Gegensatz zu bekannten Anordnungen, wie beispielsweise der aus Stefan Butzmann (Herausgeber): "Sensorik im Kraftfahrzeug", expert Verlag, 2006, Seiten 73-81, bekannten Anordnung, bietet diese Anordnung des Dichtkegels am dem fluiden Medium zuweisenden Ende des Steckfühlers den Vorteil, dass die Kegeldichtung durch das Außengewinde gegenüber Spritzwasser und Luftfeuchtigkeit geschützt werden kann. Auf diese Weise lässt sich Korrosion an der Kegeldichtung stark verringern beziehungsweise vermeiden.

Weiterhin kann in dem Außengewinde mindestens eine Ausblasnut, vorzugsweise zwei Ausblasnuten, vorgesehen sein, welche ausgestaltet ist (beziehungsweise sind), um beim Einschrauben des Außengewindes in die Steckfühlerbohrung einen Überdruck zu entlüften. Diese mindestens eine Ausblasnut ist konstruktionstechnisch leicht integrierbar und erleichtert den Einschraubvorgang erheblich.

Ein weiterer, alternativ oder zusätzlich einsetzbarer Gedanke besteht darin, den Steckfühler ganz oder teilweise mittels eines pulvermetallurgischen Verfahrens, vorzugsweise mittels eines Metall-Spritzgießverfahrens (englisch Metal Injection Molding, MIM), herzustellen. So kann insbesondere der Sensorkörper ein außenliegendes Gewindestück mit einem Außengewinde und einen Einsatz mit der Durchgangsbohrung und der Temperatunfühlerbohrung umfassen. Dabei kann zumindest der Einsatz mittels des pulvermetallurgischen Verfahrens hergestellt sein.

Derartige pulvermetallurgische Verfahren, insbesondere MIM-Verfahren, sind dem Fachmann bekannt. Beim MIM-Verfahren wird eine geeignete Metallpulver-Mischung mit verschiedenen organischen und/oder anorganischen Materialien gemischt, um eine Verarbeitung mittels eines Spritzgießvorgangs zu ermöglichen. Beispielsweise kann die Mischung neben dem Metallpulver einen oder mehrere organische Bindermaterialien umfassen, welche die erforderlichen Eigenschaften, beispielsweise eine Thixotropie, gewährleisten. Nach dem Spritzgießen, wodurch ein so genannter "Grünling" gebildet wird, wird dann in einem ersten Temperaturbehandlungsschritt (welcher auch ganz oder teilweise durch chemische Verfahren ersetzt werden kann) das Bindermaterial ganz oder teilweise aus dem Grünling entfernt, und es entsteht ein so genannter "Braunling". Anschließend wird in einem weiteren Temperaturbehandlungsschritt der Braunling gesintert, wobei beim Sintern die Metallpartikel teilweise miteinander verschmelzen und ein solider (wenn auch üblicherweise poröser) Metallkörper entsteht. Auf diese Weise lässt sich, im Gegensatz zu konventioneller, spanabhebender Bearbeitung, ein kostengünstiges Bauteil erstellen. Dieses kostengünstige Bauteil, insbesondere der Einsatz, lässt sich dann kombinieren mit weiteren Bauteilen, beispielsweise dem Gewindestück, welches eine komplexere, mittels MIM-Technologie nur schwer herstellbare Geometrie aufweist. Auf diese Weise lassen sich die Vorteile konventioneller Technologien mit pulvermetallurgischen Technologien kombinieren.

Dementsprechend wird auch ein Verfahren zur Herstellung eines derartigen Steckfühlers vorgeschlagen, bei welchem der Einsatz mittels des pulvermetallurgischen Verfahrens hergestellt wird, wobei das Gewindestück nicht notwendigerweise pulvermetallurgisch, sondern beispielsweise auch konventionell (z. B. spanabhebend) hergestellt werden kann. Nach Herstellung von Einsatz und Gewindestück wird der Einsatz in das Gewindestück eingesetzt, und Einsatz und Gewindestück werden formschlüssig druckdicht miteinander verbunden. Besonders bewährt hat sich dabei der Einsatz von Laserschweißverfahren. Auf diese Weise lässt sich kostengünstig ein Steckfühler herstellen, welcher für den beschriebenen Einsatz, insbesondere in CO₂-Klimaanlagen, optimiert ist, welcher eine hohe Langzeitstabilität und Unempfindlichkeit gegenüber Korrosion aufweist, welcher kleinbauend ist und einfach einzubauen ist, welcher auch in Großserie gefertigt werden kann und welcher dennoch eine im Vergleich zum Stand der Technik hohe Genauigkeit bei der Messung der Temperatur des fluiden Mediums aufweist.

### Kurze Beschreibung der Zeichnungen

Ausfühnungsbeispiele der Erfindung sind in den Zeichnungen dargestellt und in der nachfolgenden Beschreibung näher erläutert.

Es zeigen:
- Figur 1: eine Querschnittszeichnung eines ersten Ausführungsbeispiels eines Steckfühlers;
- Figur 2: eine Querschnittszeichnung eines Sensorkörpers des Ausführungsbeispiels gemäß Figur 1;
- Figur 3: eine Seitenansicht des Sensorkörpers gemäß Figur 2;
- Figur 4: eine perspektivische Darstellung des Sensorkörpers gemäß Figur 2 in Ansicht schräg von oben;
- Figur 5: ein zweites Ausführungsbeispiel eines Steckfühlers mit zweiteilig aufgebautem Sensorkörper in Schnittdarstellung;
- Figur 6A: ein Gewindestück des Sensorkörpers gemäß dem Ausführungsbeispiel in Figur 5 in Schnittdarstellung;
- Figur 6B: das Gewindestück gemäß Figur 6A in perspektivischer Darstellung schräg von oben;
- Figur 6C: einen Einsatz eines Sensorkörpers gemäß dem Ausführungsbeispiel in Figur 5 in Seitenansicht;
- Figur 6D: den Einsatz gemäß Figur 6C in Schnittdarstellung; und
- Figur 6E: den Einsatz gemäß Figur 6C in perspektivischer Darstellung schräg von oben.

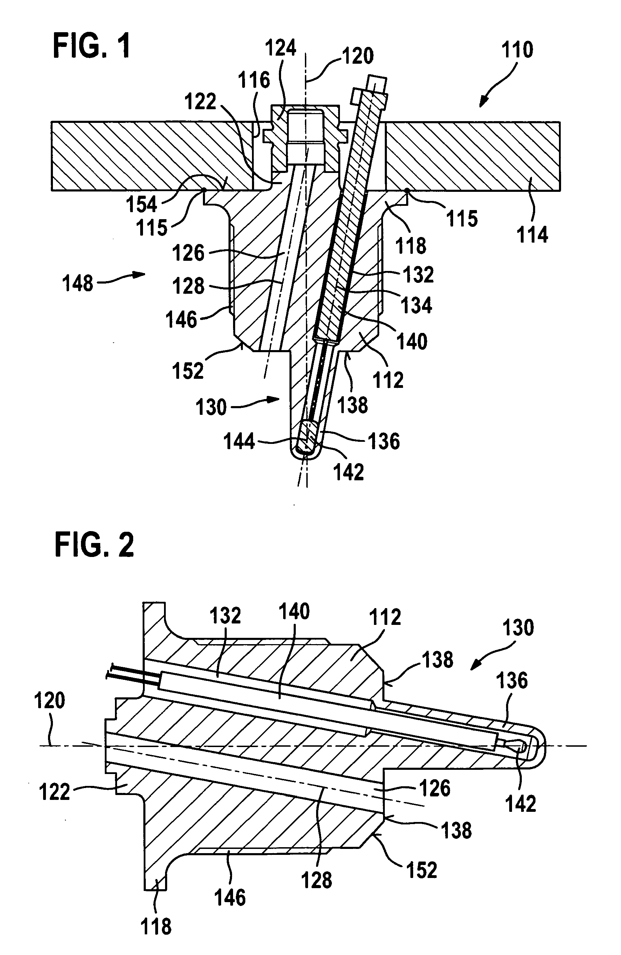

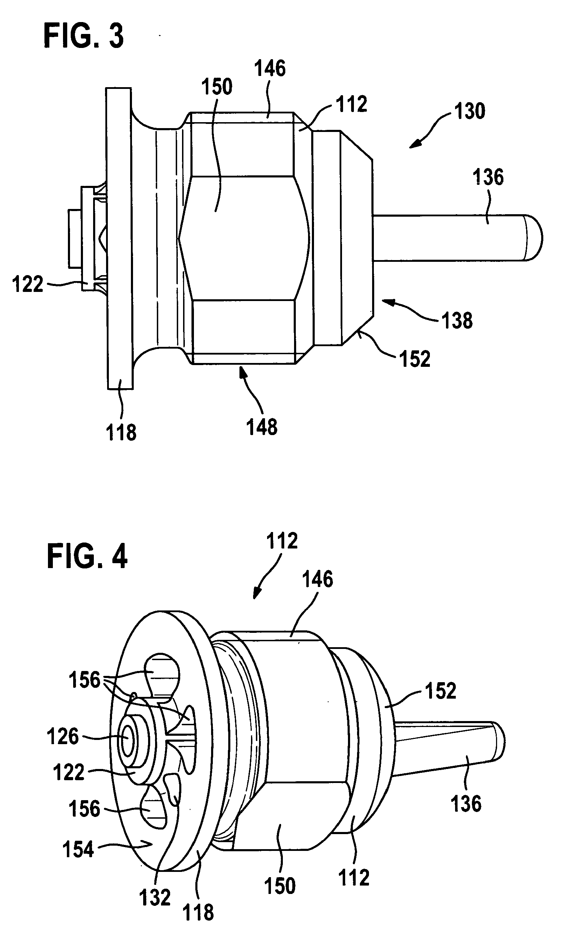

In den Figuren 1 bis 4 ist ein erstes Ausführungsbeispiel eines erfindungsgemäßen Steckfühlers 110 dargestellt. Dabei zeigt Figur 1 eine Schnittdarstellung des Steckfühlers 110, Figur 2 eine Schnittdarstellung eines Sensorkörpers 112 des Steckfühlers 110, Figur 3 eine Seitenansicht des Sensorkörpers 112 und Figur 4 eine perspektivische Darstellung des Sensorkörpers 112. Diese Figuren werden im Folgenden in Zusammenschau erläutert.

Der Steckfühler 110 gemäß Figur 1 weist neben dem Sensorkörper 112 ein Sechskant 114 mit einer zentralen Bohrung 116 auf. Der Sensorkörper 112 ist mit dem Sechskant 114 durch eine stoffschlüssige Verbindung 115 (beispielsweise Schweißen) verbunden, dergestalt, dass der Sensorkörper 112 konzentrisch zur zentralen Bohrung 116 angeordnet ist und dass die Oberseite des Sensorkörpers 112 durch die zentrale Bohrung 116 zugänglich ist. Die stoffschlüssigen Verbindungen der einzelnen Bauteile sind in den Figuren allgemein mit dem Bezugszeichen 115 bezeichnet. Der Sensorkörper 112 weist zum Zweck dieser stoffschlüssigen Verbindung 115 an seinem oberen, dem Sechskant 114 zugewandten Ende einen Ansatz 118 mit einer Auflagefläche 154 auf.

Der Sensorkörper 112 weist eine Sensorkörperachse 120 auf. Am oberen Ende des Sensorkörpers 112 ist ein Sensoransatz 120 vorgesehen, welcher im montierten Zustand des Steckfühlers 110 in die zentrale Bohrung 116 hineinragt und auf welchen, symmetrisch zur Sensorkörperachse 120, ein Drucksensor 124 aufgesetzt und durch stoffschlüssige Verbindung 115 angebunden ist. Beispielsweise kann es sich dabei, wie oben beschrieben, um einen Membran-Drucksensor 124 handeln, welcher vorzugsweise ebenfalls durch eine stoffschlüssige Verbindung mit dem Sensoransatz 122 verbunden wird. Alternativ oder zusätzlich können auch formschlüssige Verbindungen eingesetzt werden.

Vom Ansatz 118 aus verläuft eine Durchgangsbohrung 126 mit einer Durchgangsbohrungsachse 128 hin zum dem zu messenden fluiden Medium zugewandten Ende 130 des Steckfühlers 110. Die Durchgangsbohrungsachse 128 ist dabei von der Sensorkörperachse 120 weggeneigt und schließt mit dieser einen Winkel von (in diesem Ausführungsbeispiel) ca. 10° ein. Weiterhin ist im Sensorkörper 112 eine Temperaturfühlerbohrung 132 mit einer Temperaturfühlerbohrungsachse 134 aufgenommen. An seinem dem fluiden Medium zugewandten Ende 130 mündet diese Temperaturfühlerbohrung 132 als Sacklochbohrung in einem Messfinger 136, welcher in das fluide Medium, ausgehend von einer im Wesentlichen kreisförmigen Stirnfläche 138, hineinragt. Dabei ist die Temperaturfühlerbohrungsachse 134 der Sensorkörperachse 120 zugeneigt, so dass diese einen Winkel von ebenfalls ca. 10° einschließen. In der Temperaturfühlerbohrung 132 ist ein Temperaturfühler 140 aufgenommen, welcher an seinem unteren Ende ein Temperatursensorelement 142 in Form eines NTC-Widerstands aufweist. Das Temperatursensorelement 142 wird mittels eines Leitklebers in der Temperaturfühlerbohrung 132 vergossen und dadurch gleichzeitig fixiert und thermisch an den Messfinger 136 angekoppelt. Um den Wärmeabfluss über den Sensorkörper 112 zu verringern, ist die Füllhöhe dieses Wärmeleitklebers im Idealfall derart gewählt, dass lediglich das Temperatursensorelement 142 mit Leitkleber ummantelt ist.

Durch die schräge Anordnung der Temperaturfühlerbohrung 132 relativ zur Sensorkörperachse 120 ist gewährleistet, dass das Temperatursensorelement 142 zentral im Mediumstrom sitzt, unabhängig von der Orientierung, unter welcher der Steckfühler 110 in das Medium eingebracht wird. Dementsprechend ist die Temperaturfühlerbohrung 132 in diesem Ausführungsbeispiel derart gewählt, dass das Temperatursensorelement gerade mittig über dem Schnittpunkt 144 zwischen Temperaturfühlerbohrungsachse 134 und Sensorkörperachse 120 zu liegen kommt.

Der Steckfühler 110 ist ausgestaltet, um in eine (nicht dargestellte) Steckfühlerbohrung eingeschraubt zu werden, beispielsweise eine Steckfühlerbohrung in einem oben beschriebenen Rohrleitungssystem einer Klimaanlage. Dementsprechend taucht der Messfinger 136 in das zu messende fluide Medium ein. Dementsprechend wird die Länge des Steckfühlers 110, also die Tiefe, in welcher der Schnittpunkt 144 im Inneren des fluiden Mediums liegt, derart gewählt, dass vorzugsweise dieser Schnittpunkt 144 zentral im Strömungsrohr des fluiden Mediums angeordnet ist. Um ein Einschrauben des Steckfühlers 110 in die Steckfühlerbohrung zu ermöglichen, ist der Sensorkörper 112 mit einem Außengewinde 146 ausgestattet, welches im Detail in der Seitenansicht gemäß Figur 3 zu erkennen ist. Dieses Außengewinde 146 erstreckt sich dabei lediglich über einen Teil der zylindermantelförmigen Außenfläche 148 des Sensorkörpers 112. Um beim Einschrauben des Außengewindes 146 in die Steckfühlerbohrung einen Restdruck im System abbauen zu können, befinden sich seitlich am Außengewinde 146 zwei Ausblasnuten 150, über die der Überdruck beim Aufschrauben entlüftet wird. Dabei sind in diesem Ausführungsbeispiel die Ausblasnuten 150 diametral einander gegenüberliegend angeordnet. Auch eine abweichende Anzahl von Ausblasnuten ist denkbar, sowie eine andere Ausgestaltung und/oder Anordnung dieser Ausblasnuten 150.

Am Übergang zwischen zylindermantelförmiger Außenfläche 148 und der Stirnfläche 138 des Sensorkörpers 112 ist eine Kegeldichtung 152 in Form einer kegelförmigen Dichtfläche vorgesehen. Dabei wird im vorliegenden Ausführungsbeispiel ein Kegelwinkel von ca. 45° eingesetzt. Ein Vorteil dieser Anordnung der Kegeldichtung 152 am dem Medium zugewandten Ende 130 des Steckfühlers 110 liegt insbesondere darin, dass das Außengewinde 146 die Kegeldichtung 152 vor eindringendem Spritzwasser schützt.

Wie insbesondere aus der perspektivischen Darstellung des Sensorkörpers 112 in Figur 4 hervorgeht, ist der Steckfühler 110 im vorliegenden Ausführungsbeispiel in stark gewichtsreduzierter Form ausgestaltet. Zu diesem Zweck sind auf der im Wesentlichen kreisförmigen oberen Auflagefläche 154 des Sensorkörpers 112, in der Nähe des Sensoransatzes 122, vier Aussparungen 156 vorgesehen. Diese Aussparungen 156, welche (vergleiche Figur 1) möglichst außerhalb des Bereiches, in dem eine stoffschlüssige Verbindung zwischen Sensorkörper 112 und Sechskant 114 erfolgt, angeordnet sind, dienen neben einer Gewichtsreduzierung auch einer gleichmäßigen Verteilung der Wandstärken, was eine bessere Verarbeitung ermöglicht (beispielsweise bei einem Spritzgießvorgang, siehe unten). Weiterhin wird Material eingespart, was sich positiv auf die Herstellungskosten auswirkt. Für die Druck- und/oder Temperaturerfassung haben die Aussparungen 156 keine Funktion. Auch die Festigkeit einer Schweißnaht zwischen Sensorkörper 112 und Sechskant 114 wird durch die Aussparungen 156 nicht beeinflusst. Auch andere Ausgestaltungen der Aussparungen 156, insbesondere hinsichtlich Anordnung, Form und/oder Anzahl, sind denkbar.

Der Steckfühler 110 ist in der Darstellung gemäß Figur 1 lediglich unvollständig abgebildet. So sind insbesondere weitere Komponenten des Steckfühlers, wie beispielsweise elektrische Verbindungen zum Drucksensor 124 und/oder zum Temperatursensorelement 142, nicht dargestellt. Üblicherweise ist dementsprechend auf dem Sechskant 114 auf der Oberseite, d. h. auf der dem Ende 130 gegenüberliegenden Seite, ein Gehäuse vorgesehen, welches beispielsweise einen Stecker zur Kontaktierung des Steckfühlers 110 (Versorgung mit elektrischer Energie und Signalabgriff), eine Elektronikplatine mit einer Ansteuer- und Auswerteschaltung sowie weitere Komponenten beinhaltet. Für diese Ausgestaltung sei beispielsweise auf das oben beschriebene Zitat (Stefan Butzmann) verwiesen.

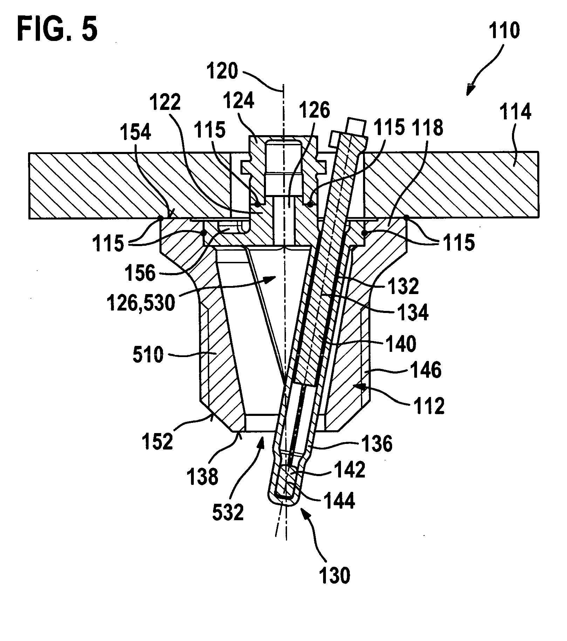

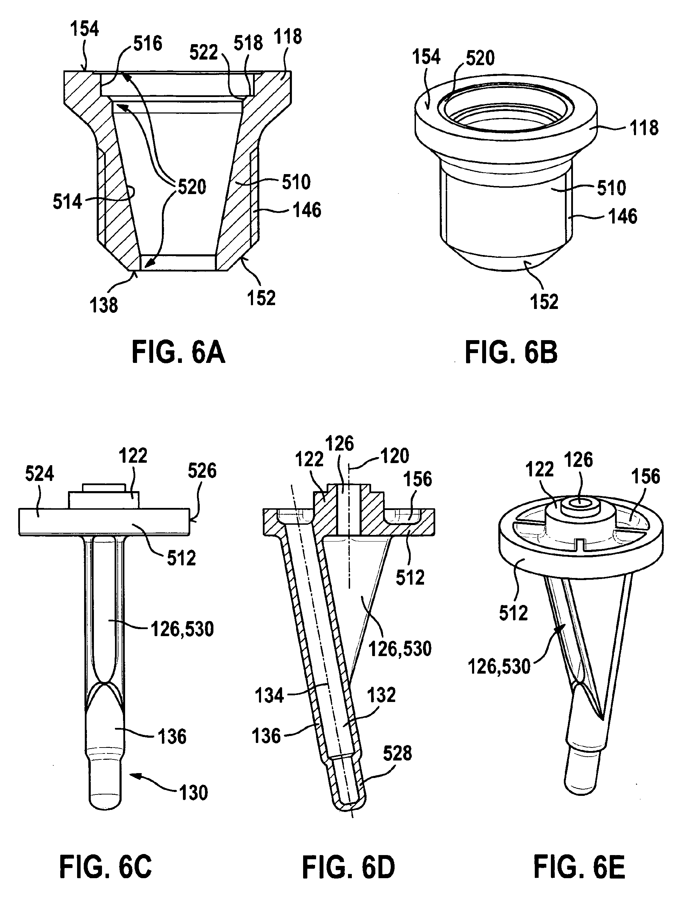

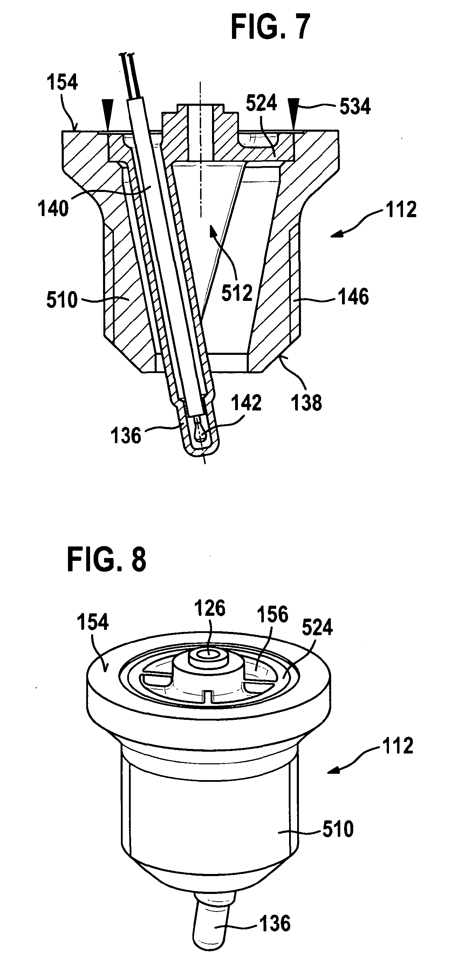

In den Figuren 5 bis 8 ist ein zweites Ausführungsbeispiel eines erfindungsgemäßen Steckfühlers 110 dargestellt. Im Gegensatz zum Ausführungsbeispiel gemäß den Figuren 1 bis 4 ist dabei der Sensorkörper 112 jedoch, wie oben beschrieben, mittels eines pulvermetallurgischen Spritzgießverfahrens (MIM) hergestellt. Der Grund für die Umstellung auf das MIM-Verfahren sind die vergleichsweise komplexe Geometrie und die schrägen Bohrungen, welche durch konventionelle, spanende Bearbeitung nur schwer und unter hohem Kostenaufwand realisiert werden können. In Figur 5 ist dabei eine Schnittdarstellung des Steckfühlers 110 dargestellt, welche der Darstellung in Figur 1 entspricht. In den Figuren 6A bis 6E sind Bauteile des Sensorkörpers 112 in verschiedenen Darstellungen gezeigt. Figur 7 zeigt einen Arbeitsschritt, in welchem die Bauteile des Sensorkörpers 112 stoffschlüssig miteinander verbunden werden, und Figur 8 zeigt eine perspektivische Darstellung des Sensorkörpers 112 schräg von oben.

Wie in Figur 5 zu erkennen, ähnelt der Aufbau gemäß dem zweiten Ausführungsbeispiel weitgehend dem Aufbau gemäß Figur 1. Wiederum ist ein Sensorkörper 112 vorgesehen, welcher an einer Auflagefläche 154 mit einem Sechskant 114 stoffschlüssig verbunden ist. Die stoffschlüssigen Verbindungen sind wiederum allgemein mit dem Bezugszeichen 115 bezeichnet. Ebenso ist wiederum ein Drucksensor 124 vorgesehen, welcher auf einen Sensoransatz 122 des Sensorkörpers 112 aufgesetzt ist, sowie ein Temperaturfühler 140 mit einem Temperatursensorelement 142, welcher in eine Temperaturfühlerbohrung 132 eingebracht ist. Wiederum ist auch ein Messfinger 136 vorgesehen, wobei die Geometrie, insbesondere die Anordnung des Schnittpunkts 144, der Geometrie des Aufbaus in Figur 1 entspricht.

Im Gegensatz zum Aufbau gemäß Figur 1 ist der Sensorkörper 112 gemäß dem Beispiel in Figur 5 jedoch im Wesentlichen zweiteilig ausgestaltet. Dementsprechend umfasst dieser ein außenliegendes Gewindestück 510 (vergleiche die Darstellungen in den Figuren 6A und 6B) und einen Einsatz 512 (vergleiche die Darstellungen in den Figuren 6C bis 6E). Das Gewindestück 510 mit seinem Außengewinde 146 ist dabei in konventioneller Bauweise als Drehteil gefertigt und weist auf der Außenseite entsprechende Formgebung zum Sensorkörper 112 gemäß der Darstellung in den Figuren 1 bis 4 auf. So ist wiederum ein Ansatz 118 vorgesehen sowie eine Auflagefläche 154 an der dem Sechskant 114 zugewandten Seite, für eine stoffschlüssige Verbindung. Weiterhin ist eine Kegeldichtung 152 vorgesehen, am Übergang zur Stirnfläche 138. Dabei dient in der Regel beim Einsatz des Sensorkörpers 112 lediglich die Kegeldichtung 152 der eigentlichen Druckabdichtung, wohingegen an den Ansatz 118 und die Auflagefläche 154 (bzw. deren stoffschlüssige Verbindungen 115) in der Regel geringere Anforderungen hinsichtlich der Dichtigkeit zu stellen sind (lediglich Umgebungsdruck). Ansatz 118 und Auflagefläche 154 dienen regelmäßig lediglich der Übertragung von Drehmomenten beim Einbau (z.B. beim Einschrauben) des Steckfühlers 110.

In seinem Inneren unterscheidet sich das Gewindestück 510 jedoch deutlich von dem Sensorkörper 112 gemäß Figur 1. So weist das Gewindestück 510 innenliegend eine konusförmige Bohrung 514 auf, welche in ihrem Konuswinkel vorzugsweise im Wesentlichen dem Winkel zwischen Temperaturfühlerbohrungsachse 134 und Sensorkörperachse 120 entspricht, also ungefähr 15° beträgt. Am der Auflagefläche 154 zugewandten Ende geht die konusförmige Bohrung 514 über in eine zylinderförmige Erweiterung 516 mit einer Auflageschulter 518. Weiterhin sind noch Übergangsbereiche 520 in Form von weiteren zylinderförmigen Bohrungen vorgesehen. Am Übergang zwischen der zylinderförmigen Erweiterung 516 und der konusförmigen Bohrung 514 ist eine kleine Einführschräge 522 vorgesehen.

In den Figuren 6C bis 6E ist der Einsatz 512 im Detail dargestellt. Dieser Einsatz ist, wie oben beschrieben, in diesem Ausführungsbeispiel als pulvermetallurgisches Spritzgussteil ausgebildet und dementsprechend in seiner Geometrie optimiert, um beispielsweise eine Entformung nach Beendigung des Spritzgießvorgangs zu gewährleisten. Für Details des MIM-Verfahrens sei auf die obige Beschreibung verwiesen. Der Einsatz 512 weist an seinem oberen Ende, unterhalb des Sensoransatzes 122, ein im Wesentlichen kreisförmig ausgestaltetes Kopfteil 524 auf. Dieses Kopfteil 524 ist mit einer zylinderflächenförmigen Schweißfläche 526 entlang seinem Umfang versehen.

Ähnlich zur Ausgestaltung in Figur 1 ist auch in dem Einsatz 512 gemäß den Figuren 6C bis 6E eine Temperaturfühlerbohrung 132 vorgesehen, mit einer Temperaturfühlerbohrungsache 134. Dabei ist der Messfinger 136 als durchgehende Sacklochhülse ausgestaltet, welche sich, vom Kopfteil 524 ausgehend, nach unten, zum dem Medium zugewandten Ende 130 des Steckfühlers erstreckt. Wiederum, wie auch im Ausführungbeispiel gemäß Figur 1, weist die Temperaturfühlerbohrung 132 im Bereich des vorderen Endes 130 eine Verdünnung 528 auf, in welcher (siehe Figur 5) das Temperatursensorelement 142 aufgenommen wird.

Im Gegensatz zum Ausführungsbeispiel gemäß Figur 1 ist die Durchgangsbohrung 126 lediglich im Bereich des Kopfteils 524 als zylindrische Bohrung ausgestaltet. Anschlie-βend geht die Durchgangsbohrung 126 über in einen schlitzförmigen Bereich 530, wie beispielsweise aus den Darstellungen in den Figuren 6C und 6D zu entnehmen ist. Bei in das Gewindestück 510 eingesetztem Einsatz 512 wird die Durchgangsbohrung 126 also nur teilweise begrenzt durch den Einsatz 512, und zu einem weiteren Teil durch die Innenwand der konusförmigen Bohrung 514. Dabei verbleibt am dem Medium zugewandten Ende 130 des Steckfühlers 110, wie in Figur 5 ersichtlich ist, eine Drucköffnung 532 zwischen Einsatz 512 und Gewindestück 510, so dass fluides Medium durch die Drucköffnung 532 und den schlitzförmigen Bereich 530 zum Drucksensor 124 gelangen kann. Wiederum sind aus Gründen der Gewichtsersparnis, der Materialeinsparung und der besseren Materialverteilung (insbesondere im Spritzgießwerkzeug), im Bereich des Kopfteils 524 des Einsatzes 512 Aussparungen 156 vorgesehen.

Nach Herstellung von Gewindestück 510 und Einsatz 512 müssen beide Teile miteinander verbunden werden. Dies ist schematisch in Figur 7 in Schnittdarstellung gezeigt. Üblicherweise ist bei diesem Verbinden zwischen Gewindestück 510 und Einsatz 512 jedoch der Temperaturfühler 140 noch nicht, wie in Figur 7 dargestellt, in die Temperaturfühlerbohrung 132 eingefügt. Wie der Figur 7 zu entnehmen ist, wird zum Verbinden zunächst der Einsatz 512 in die konusförmige Bohrung 514 des Gewindestücks 510 eingesetzt, so dass das Kopfteil 524 auf der Auflageschulter 518 aufliegt. Dabei ist die Höhe der Schweißfläche 526 des Kopfteils 524 so bemessen, dass bei eingefügtem Einsatz 512 die obere Fläche des Kopfteils 524 etwas unterhalb der Auflagefläche 154 des Gewindestücks 510 liegt, damit eventuell auftretende Schweißnähte ein bündiges Anliegen an dem Sechskant 114 (siehe Figur 5) nicht behindern.

Nach dem Einfügen wird dann mittels eines stoffschlüssigen Verfahrens der Einsatz 512 mit dem Gewindestück 510 verbunden. Vorzugsweise wird für diese Verbindung, welche hohen Anforderungen an die Dichtigkeit und Temperaturbeständigkeit genügen muss, ein Laserschweißverfahren eingesetzt, welches in Figur 7 mit der Bezugsziffer 534 bezeichnet ist. Nach dem Fügen von Einsatz 512 und Gewindestück 510 und dem Laserschweißen 534 erfolgt eine weitere Montage des Steckfühlers 110, indem beispielsweise der Temperaturfühler 140 eingefügt wird, der Drucksensor 124 aufgesetzt wird, und indem der Sechskant 114 und die weiteren Komponenten des Steckfühlers 110 montiert werden.

In Figur 8 ist der Sensorkörper 112 nach dem Laserschweißen im montierten Zustand dargestellt. Deutlich ist dabei zu erkennen, dass das Kopfteil 524 des Einsatzes 512 gegenüber der Auflagefläche 154 vertieft ist.

## Patentansprüche

1. Steckfühler (110) zur Druck- und Temperaturmessung eines fluiden Mediums, insbesondere für den Einsatz im Kühlmittelkreislauf einer Klimaanlage eines Kraftfahrzeugs, aufweisend einen Sensorkörper (112) mit einer Sensorkörperachse (120), einen im Wesentlichen konzentrisch auf der Sensorkörperachse (120) angeordneten Drucksensor (124), eine im Sensorkörper (112) angeordnete Durchgangsbohrung (126) zur Verbindung des Drucksensors (124) mit dem fluiden Medium sowie eine im Sensorkörper (112) angeordnete Temperaturfühlerbohrung (132) mit einem darin aufgenommenen Temperaturfühler (140), **dadurch gekennzeichnet, dass** die Temperaturfühlerbohrung (132) eine Temperaturfühlerbohrungsachse (134) aufweist, welche gegenüber der Sensorkörperachse (120) derart geneigt ist, dass diese an ihrem dem fluiden Medium zuweisenden Ende (130) der Sensorkörperachse (120) zugeneigt ist, und dass ein aus dem Sensorkörper (112) hervorstehender Messfmger (136) vorgesehen ist, wobei die Temperaturfühlerbohrung (132) als Sacklochbohrung ausgestaltet ist und ganz oder teilweise in dem Messfinger (136) angeordnet ist und wobei das Temperatursensorelement (142) ganz oder teilweise in dem Messfinger (136) angeordnet ist.

2. Steckfühler (110) gemäß dem vorhergehenden Anspruch, **dadurch gekennzeichnet, dass** der Temperaturfühler (140) ein Temperatursensorelement (142) aufweist, vorzugsweise einen NTC-Widerstand, wobei die Temperaturfuhlerbohrungsachse (134) derart angeordnet ist, dass diese die Sensorkörperachse (120) im Bereich des Temperatursensorelements (142) schneidet

3. Steckfühler (110) gemäß einem der vorhergehenden Ansprüche, **dadurch gekennzeichnet, dass** die Temperaturfuhlerbohrungsachse (134) mit der Sensorkörperachse (120) einen Winkel im Bereich zwischen 3° und 70°, vorzugsweise zwischen 5° und 20° und besonders bevorzugt bei 13° einschließt.

4. Steckfühler (110) gemäß einem der vorhergehenden Ansprüche, **dadurch gekennzeichnet, dass** die Durchgangsbohrung (126) zumindest teilweise zylindrisch mit einer Durchgangsbohrungsachse (128) ausgestaltet ist.

5. Steckfühler (110) gemäß dem vorhergehenden Anspruch, **dadurch gekennzeichnet, dass** die Durchgangsbohrungsachse (128) zur Sensorkörperachse (120) geneigt ist, derart, dass die Durchgangsbohrungsachse (128) an ihrem dem fluiden Medium zuweisenden Ende (130) von der Sensorkörperachse (120) weggeneigt ist.

6. Steckfühler (110) gemäß dem vorhergehenden Anspruch, **dadurch gekennzeichnet, dass** die Durchgangsbohrungsachse (128) mit der Sensorkörperachse (120) einen Winkel im Bereich zwischen 3° und 70°, vorzugsweise zwischen 2° und 20° und besonders bevorzugt bei 13° einschließt.

7. Steckfühler (110) gemäß einem der vorhergehenden Ansprüche, **dadurch gekennzeichnet, dass** der Sensorkörper (112) ein Außengewinde (146) und an seinem dem fluiden Medium zuweisenden Ende (130) eine Kegeldichtung (152) aufweist.

8. Steckfühler (110) gemäß dem vorhergehenden Anspruch, **dadurch gekennzeichnet, dass** im Außengewinde (146) mindestens eine Ausblasnut (150), vorzugsweise zwei Ausblasnuten (150), vorgesehen ist, wobei die mindestens eine Ausblasnut (150) ausgestaltet ist, um beim Einschrauben des Außengewindes (146) in eine Steckfühlerbohrung einen Überdruck zu entlüften.

9. Steckfühler (110) gemäß einem der vorhergehenden Ansprüche, **dadurch gekennzeichnet, dass** der Steckfühler (110) ganz oder teilweise mittels eines pulvermetallurgischen Verfahrens, vorzugsweise mittels eines Metall-Spritzgießverfahrens, hergestellt ist.

10. Steckfühler (110) gemäß dem vorhergehenden Anspruch, **dadurch gekennzeichnet, dass** der Sensorkörper (112) ein außenliegendes Gewindestück (510) mit einem Außengewinde (146) und einen Einsatz (512) mit der Durchgangsbohrung (126) und der Temperaturfühlerbohrung (132) umfasst, wobei zumindest der Einsatz (512) mittels eines pulvermetallurgischen Verfahrens, vorzugsweise mittels eines Metall-Spritzgießverfahrens, hergestellt ist.

11. Verfahren zur Herstellung eines Steckfühlers (110) gemäß Anspruch 10, mit folgenden Schritten:
- Herstellung des Einsatzes (512) mittels des pulvermetallurgischen Verfahrens;
- Herstellung des Gewindestücks (510);
- Einfügen des Einsatzes (512) in das Gewindestück (510); und
- formschlüssiges, druckdichtes Verbinden von Einsatz (5 12) und Gewindestück (510), vorzugsweise mittels eines Laserschweißverfahrens (534).

## Claims

1. Plug-in sensor (110) for measuring the pressure and temperature of a fluid medium, in particular for use in the coolant circuit of an air-conditioning system of a motor vehicle, having a sensor body (112) with a sensor body axis (120), a pressure sensor (124) arranged substantially concentrically on the sensor body axis (120), a through-bore (126), arranged in the sensor body (112), for connecting the pressure sensor (124) to the fluid medium, and also a temperature sensor bore (132), arranged in the sensor body (112), with a temperature sensor (140) accommodated therein, **characterized in that** the temperature sensor bore (132) has a temperature sensor bore axis (134) which is inclined with respect to the sensor body axis (120) in such a manner that it is inclined towards the sensor body axis (120) at its end (130) which faces towards the fluid medium, and **in that** a measuring finger (136) which protrudes from the sensor body (112) is provided, wherein the temperature sensor bore (132) is configured as a blind hole bore and is arranged entirely or in part in the measuring finger (136), and wherein the temperature sensor element (142) is arranged entirely or in part in the measuring finger (136).

2. Plug-in sensor (110) according to the preceding claim, **characterized in that** the temperature sensor (140) has a temperature sensor element (142), preferably an NTC thermistor, wherein the temperature sensor bore axis (134) is arranged in such a manner that it intersects the sensor body axis (120) in the region of the temperature sensor element (142).

3. Plug-in sensor (110) according to either of the preceding claims, **characterized in that** the temperature sensor bore axis (134) includes an angle in the range of between 3° and 70°, preferably of between 5° and 20° and particularly preferably of 13°, with the sensor body axis (120).

4. Plug-in sensor (110) according to one of the preceding claims, **characterized in that** the through-bore (126) is configured to be at least partially cylindrical with a through-bore axis (128).

5. Plug-in sensor (110) according to the preceding claim, **characterized in that** the through-bore axis (128) is inclined with respect to the sensor body axis (120), in such a manner that the through-bore axis (128) is inclined away from the sensor body axis (120) at its end (130) which faces towards the fluid medium.

6. Plug-in sensor (110) according to the preceding claim, **characterized in that** the through-bore axis (128) includes an angle in the range of between 3° and 70°, preferably of between 5° and 20° and particularly preferably of 13°, with the sensor body axis (120).

7. Plug-in sensor (110) according to one of the preceding claims, **characterized in that** the sensor body (112) has an external thread (146) and, at its end (130) which faces towards the fluid medium, a conical seal (152).

8. Plug-in sensor (110) according to the preceding claim, **characterized in that** the external thread (146) is provided with at least one blow-out groove (150), preferably two blow-out grooves (150), wherein the at least one blow-out groove (150) is configured to vent an overpressure when the external thread (146) is being screwed into a plug-in sensor bore.

9. Plug-in sensor (110) according to one of the preceding claims, **characterized in that** the plug-in sensor (110) is produced entirely or in part by means of a powder metallurgy process, preferably by means of a metal injection moulding process.

10. Plug-in sensor (110) according to the preceding claim, **characterized in that** the sensor body (112) comprises an external threaded piece (510) with an external thread (146) and an insert (512) with the through-bore (126) and the temperature sensor bore (132), wherein at least the insert (512) is produced by means of a powder metallurgy process, preferably by means of a metal injection moulding process.

11. Process for producing a plug-in sensor (110) according to Claim 10, said process comprising the following steps:
- the insert (512) is produced by means of the powder metallurgy process;
- the threaded piece (510) is produced;
- the insert (512) is inserted into the threaded piece (510); and
- the insert (512) and the threaded piece (510) are connected in a form-fitting, pressure-tight manner, preferably by means of a laser welding process (534).

## Revendications

1. Sonde enfichable (110) destinée à mesurer la pression et la température d'un milieu fluide et en particulier à être utilisée dans le circuit d'agent de refroidissement d'une installation de climatisation d'un véhicule automobile, la sonde enfichable présentant
un corps de sonde (112) doté d'un axe (120) de corps de sonde,
une sonde de pression (124) disposée essentiellement concentriquement à l'axe (120) du corps de sonde,
un alésage de passage (126) disposé dans le corps de sonde (112) et destiné à relier la sonde de pression (124) au milieu fluide ainsi que
un alésage (132) de sonde de température disposé dans le corps de sonde (112) et dans lequel une sonde de température (140) est logée,
**caractérisée en ce que**
l'alésage (132) de la sonde de température présente un axe (134) d'alésage de sonde de température incliné par rapport à l'axe (120) du corps de sonde en direction de l'extrémité (130) de l'axe (120) du corps de sonde tournée vers le milieu fluide et
**en ce qu'**un doigt de mesure (136) qui déborde hors du corps de sonde (112) est prévu, l'alésage (132) de la sonde de température étant configuré comme alésage en trou aveugle et étant disposé en totalité ou en partie dans le doigt de mesure (136), l'élément (142) de sonde de température étant disposé en totalité ou en partie dans le doigt de mesure (136).

2. Sonde enfichable (110) selon la revendication précédente, **caractérisée en ce que** la sonde de température (140) présente un élément (142) de sonde de température, de préférence une résistance NTC, l'axe (134) de l'alésage de la sonde de température étant disposé de telle sorte qu'il coupe l'axe (120) du corps de sonde au niveau de l'élément (142) de sonde de température.

3. Sonde enfichable (110) selon l'une des revendications précédentes, **caractérisée en ce que** l'axe (134) de l'alésage de sonde de température forme avec l'axe (120) du corps de sonde un angle de l'ordre de 3° à 70°, de préférence de 5° à 20° et de façon particulièrement préférable de 13°.

4. Sonde enfichable (110) selon l'une des revendications précédentes, **caractérisée en ce que** l'alésage de passage (126) est au moins partiellement cylindrique et présente un axe (128) d'alésage de passage.

5. Sonde enfichable (110) selon la revendication précédente, **caractérisée en ce que** l'axe (128) de l'alésage de passage est incliné par rapport à l'axe (120) du corps de sonde de telle sorte que l'axe (128) de l'alésage de passage soit incliné en s'éloignant de l'axe (120) du corps de sonde à son extrémité (130) tournée vers le milieu fluide.

6. Sonde enfichable (110) selon la revendication précédente, **caractérisée en ce que** l'axe (128) de l'alésage de passage forme avec l'axe (120) du corps de sonde un angle de l'ordre de 3° à 70°, de préférence de 5° à 20° et de façon particulièrement préférable de 13°.

7. Sonde enfichable (110) selon l'une des revendications précédentes, **caractérisée en ce qu'**à son extrémité (130) tournée vers le milieu fluide, le corps de sonde (112) présente un filet extérieur (146) et un joint d'étanchéité conique (152).

8. Sonde enfichable (110) selon la revendication précédente, **caractérisée en ce qu'**au moins une rainure d'évent (150) et de préférence deux rainures d'évent (150) sont prévues dans le filet extérieur (146), la ou les rainures d'évent (150) étant formées de manière à évacuer la surpression qui survient lorsque le filet extérieur (146) est vissé dans un alésage de sonde enfichable.

9. Sonde enfichable (110) selon l'une des revendications précédentes, **caractérisée en ce que** la sonde enfichable (110) est réalisée en totalité ou en partie au moyen d'un procédé de la métallurgie des poudres et de préférence au moyen d'un procédé de moulage de métal par injection.

10. Sonde enfichable (110) selon la revendication précédente, **caractérisée en ce que** le corps de sonde (112) comporte une pièce filetée extérieure (510) dotée d'un filet extérieur (146) et une garniture (512) qui présente l'alésage de passage (126) et l'alésage (132) de la sonde de température, au moins la garniture (512) étant réalisée au moyen d'un procédé de la métallurgie des poudres et de préférence d'un procédé de moulage de métal par injection.

11. Procédé de fabrication d'une sonde enfichable (110) selon la revendication 10, le procédé présentant les étapes suivantes :
- fabrication de la garniture (512) au moyen du procédé de la métallurgie des poudres,
- fabrication de la pièce filetée (510),
- insertion de la garniture (512) dans la pièce filetée (510) et
- liaison en correspondance géométrique et étanche à la pression de la garniture (512) et de la pièce filetée (510), de préférence au moyen d'un procédé (534) de soudage au laser.
